# EUROPÄISCHE PATENTANMELDUNG

(11) **EP 1 533 172 A1**
(43) Veröffentlichungstag der Anmeldung: **25.05.2005**
(21) Anmeldenummer: 05003207.7
(22) Anmeldetag: 26.10.2002
(51) Int. Cl.: B60K 31/00

(54) **Verfahren zur Einstellung eines Grenzgeschwindigkeits-Systems und eines Fahrgeschwindigkeits-Regelungs-Systems eines Kraftfahrzeuges**

(30) Priorität: 06.11.2001 DE 10154385
(62) Teilanmeldung aus: 02024005.7
(71) Anmelder: ADAM OPEL AG, 65423 Rüsselsheim (DE)
(72) Erfinder: Diehl, Peter G., 65421 Gross-Gerau (DE); Reuter, Udo, 55278 Dalheim (DE)

(57) **Zusammenfassung**

Ein Verfahren zur Einstellung eines Grenzgeschwindigkeits-Systems und eines Fahrgeschwindigkeits-Regelungs-Systems für ein Kraftfahrzeug hat zwei räumlich voneinander getrennte Lenkstockhebel (9, 10) mit Tastern (7, 8). Hierdurch lässt sich eine Grenzgeschwindigkeit oder eine konstant zu fahrende Geschwindigkeit besonders komfortabel einstellen. Eine Verwechslung der Bedienungen der Systeme wird zudem weitgehend vermieden.

## Beschreibung

Die Erfindung betrifft ein Verfahren zur Einstellung eines Grenzgeschwindigkeits-Systems und eines Fahrgeschwindigkeits-Regelungs-Systems eines Kraftfahrzeuges, bei dem eine maximal oder minimal fahrbare Grenzgeschwindigkeit festgelegt und bei dem eine konstant zu fahrende Fahrgeschwindigkeit eingestellt wird.

Aus der EP 0 703 110 B1 ist zudem ein Verfahren bekannt, bei dem auf einen geschwindigkeitsregelnden Eingriff mit auf eine Grenzgeschwindigkeit gesetzter Sollgeschwindigkeit umgeschaltet wird, sobald die Istgeschwindigkeit innerhalb einer vorgegebenen Zeitspanne die Grenzgeschwindigkeit erreicht.

Eine Einrichtung mit einem Grenzgeschwindigkeits-System und einem Fahrgeschwindigkeits-Regelungs-System ist beispielsweise aus der DE 195 09 492 C2 bekannt. Hierbei hat die Einrichtung einen gemeinsamen Bedienhebel für eine Tempomat-Geschwindigkeitsregeleinheit und eine Geschwindigkeits-Begrenzungsfunktionsbaugruppe. Mit dem Bedienhebel wird ein Geschwindigkeitssollwert der Tempomat-Geschwindigkeitsregeleinheit und der Geschwindigkeits-Begrenzungsfunktionsbaugruppe eingestellt. Mittels eines Schalters lässt sich zwischen der Tempomat-Geschwindigkeitsregeleinheit und der Geschwindigkeits-Begrenzungsfunktionsbaugruppe umschalten.

Nachteilig bei der bekannten Einrichtung und dem bekannten Verfahren ist, dass sich die Auswahl der Geschwindigkeiten sehr unkomfortabel gestaltet. Weiterhin besteht die Gefahr einer Fehlbedienung, wenn versehentlich eine maximal zu fahrende Geschwindigkeit des Kraftfahrzeuges auf als konstant zu fahrende Geschwindigkeit eingestellt wird.

Der Erfindung liegt das Problem zugrunde, ein Verfahren der eingangs genannten Art zu schaffen, welches ein einfaches und fehlbediensicheres Umschalten zwischen der Grenzgeschwindigkeit der konstant zu fahrenden Fahrgeschwindigkeit ermöglicht.

Das Problem wird erfindungsgemäß dadurch gelöst, dass bei Bedienung des einen Systems das andere System abgeschaltet wird.

Durch diese Gestaltung lässt sich auf jedes der Systeme einfach mittels einer einzelnen Bedienaktion zugreifen. Hierdurch kann durch das erfindungsgemäße Verfahren mit wenigen Bedienaktionen und damit besonders einfach wahlweise die konstant zu fahrende Geschwindigkeit oder die Grenzgeschwindigkeit eingestellt werden. Eine Fehlbedienung oder eine Verwechslung der Systeme lässt sich durch das erfindungsgemäße Verfahren einfach vermeiden. Hierdurch wird zudem ein Konflikt einander widersprüchlicher Eingaben vermieden, da nur der zuletzt eingegebene Befehl an das entsprechende System berücksichtigt wird.

Vorzugsweise ist dabei die Bedieneinheit für das Grenzgeschwindigkeits-System von der Bedieneinheit für das Fahrgeschwindigkeits-Regelungs-System räumlich getrennt.

Durch diese Gestaltung lässt sich mit der einen Bedieneinheit die Grenzgeschwindigkeit festlegen, während mit der anderen Bedieneinheit die konstant zu fahrende Geschwindigkeit eingestellt wird. Durch die räumliche Trennung der Bedieneinheiten der Systeme wird ein Verwechseln der Einstellungen der Geschwindigkeiten zuverlässig vermieden. Weiterhin sind durch die räumliche Trennung der Bedieneinheiten die Funktionen beider Systeme ohne Betätigung von Wechselschaltern oder dergleichen sofort zugänglich, so dass sich die Bedienung der erfindungsgemäßen Einrichtung besonders komfortabel gestaltet. Das Grenzgeschwindigkeits-System kann wahlweise als eigenständiges System ausgebildet sein oder Funktionelle Baugruppen des Fahrgeschwindigkeits-Regelungs-Systems beinhalten.

Das Verfahren gestaltet sich konstruktiv besonders einfach, wenn bei einem für die Einstellung des Fahrgeschwindigkeits-Regelungs-Systems vorgesehenen Lenkstockhebel die Bedieneinheit zur Einstellung des Grenzgeschwindigkeits-Systems einen weiteren Lenkstockhebel aufweist.

Zur weiteren Erhöhung des Komforts bei der Bedienung der erfindungsgemäßen Einrichtung trägt es bei, wenn die Lenkstockhebel der beiden Bedieneinheiten einander entsprechende Schaltelemente und/oder Regelelemente haben.

Eine für einen Fahrer des Kraftfahrzeuges besonders einfach zu merkende Bedienung der beiden Systeme wird gemäß einer anderen vorteilhaften Weiterbildung der Erfindung mit besonders geringem baulichen Aufwand ermöglicht, wenn die Lenkstockhebel spiegelbildlich zueinander angeordnet sind. Vorzugsweise weist der linke Lenkstockhebel die Bedieneinheiten für das Fahrgeschwindigkeits-Regelungs-System und der rechte Lenkstockhebel die Bedieneinheiten für das Grenzgeschwindigkeits-System auf.

Die Erfindung lässt verschiedene Ausführungsformen zu. Zur weiteren Verdeutlichung ihres Grundprinzips ist eine davon in der Zeichnung dargestellt und wird nachfolgend beschrieben. Die Zeichnung zeigt in
- Fig. 1: eine schematische Darstellung einer erfindungsgemäßen Einrichtung für ein Grenzgeschwindigkeits-System und eines Fahrgeschwindigkeits-RegelungsSystem,
- Fig. 2: eine Ansicht auf ein Lenkrad eines Kraftfahrzeuges mit zwei Lenkstockhebeln.

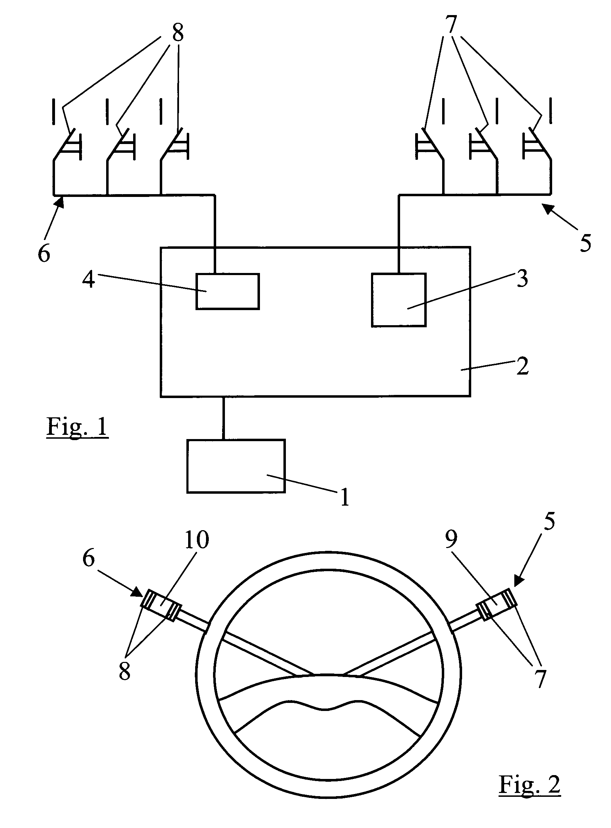

Figur 1 zeigt schematisch eine mit einem Steuergerät 1 eines Kraftfahrzeuges verbundene Steuereinrichtung 2. Das Steuergerät 1 des Kraftfahrzeuges dient zur Leistungsregelung einer nicht dargestellten Antriebseinrichtung des Kraftfahrzeuges und ist beispielsweise mit einer Drosselklappe, einer Anlage zur Einspritzung von Kraftstoff und einem Fahrpedal des Kraftfahrzeuges verbunden. Die Steuereinrichtung 2 hat eine Baugruppe 3 eines Grenzgeschwindigkeits-Systems und eine Baugruppe 4 eines Fahrgeschwindigkeits-Regelungs-Systems. Die Baugruppen 3, 4 sind jeweils mit Bedieneinheiten 5, 6 verbunden. Die Bedieneinheiten 5, 6 weisen jeweils Taster 7, 8 zum Programmieren oder Übernehmen von Geschwindigkeiten des Kraftfahrzeuges in die einzelnen Baugruppen 3, 4 auf.

Bei der Bedieneinheit 5 des Grenzgeschwindigkeits-Systems könnte beispielsweise einer der Taster 7 die momentane Fahrzeuggeschwindigkeit als Grenzgeschwindigkeit in die Baugruppe 3 übernehmen oder zum Inkrementieren der Grenzgeschwindigkeiten in Schritten, beispielsweise 5 km/h dienen. Der zweite der Taster 7 könnte während der Einstellung des Wertes für die Grenzgeschwindigkeit dekrementieren und der dritte der Taster 7 zur Aktivierung oder Deaktivierung des Grenzgeschwindigkeits-Systems dienen.

Figur 2 zeigt ein Lenkrad eines Kraftfahrzeuges mit zwei Lenkstockhebeln 9, 10. Der linke Lenkstockhebel 10 weist die Taster 8 aus Figur 1 für das Fahrgeschwindigkeits-Regelungs-System auf, während der rechte Lenkstockhebel 9 die Taster 7 aus Figur 1 für das Grenzgeschwindigkeits-System trägt. Bei der Betätigung beispielsweise der Taster 7 der einen in Figur 1 dargestellten Baugruppe 3 wird automatisch auf diese Baugruppe 3 umgeschaltet und gegebenenfalls die andere Baugruppe 4 deaktiviert. Das Grenzgeschwindigkeits-System und das Fahrgeschwindigkeits-Regelungs-System lassen sich jeweils durch Betätigung der entsprechenden Taster 7, 8 auf den jeweiligen Lenkstockhebeln 9, 10 aktivieren und programmieren.

### Bezugszeichenliste

- 1: Steuergerät
- 2: Steuereinrichtung
- 3, 4: Baugruppe
- 5, 6: Bedieneinheit
- 7, 8: Taster
- 9, 10: Lenkstockhebel

## Patentansprüche

1. Verfahren zur Einstellung eines Grenzgeschwindigkeits-Systems und eines Fahrgeschwindigkeits-Regelungs-Systems eines Kraftfahrzeuges, bei dem eine maximal oder minimal fahrbare Grenzgeschwindigkeit festgelegt und bei dem eine konstant zu fahrende Fahrgeschwindigkeit eingestellt wird, **dadurch gekennzeichnet, dass** bei Bedienung des einen Systems das andere System abgeschaltet wird.

2. Verfahren nach Anspruch 1, wobei zur Bedienung der beiden Systeme je eine Bedieneinheit zur Verfügung gestellt ist, **dadurch gekennzeichnet, dass** die Bedieneinheit (5) für das Grenzgeschwindigkeits-System von der Bedieneinheit (6) für das Fahrgeschwindigkeits-Regelungs-System räumlich getrennt ist.

3. Verfahren nach Anspruch 2, **dadurch gekennzeichnet, dass** bei einem für die Einstellung des Fahrgeschwindigkeits-Regelungs-Systems vorgesehenen Lenkstockhebel (10) die Bedieneinheit (5) zur Einstellung des Grenzgeschwindigkeits-Systems einen weiteren Lenkstockhebel (9) aufweist.

4. Verfahren nach Anspruch 3, **dadurch gekennzeichnet, dass** die Lenkstockhebel (9, 10) der beiden Bedieneinheiten (5, 6) einander entsprechende Schaltelemente und/oder Regelelemente haben.

5. Verfahren nach Anspruch 3 oder 4, **dadurch gekennzeichnet, dass** die Lenkstockhebel (9, 10) spiegelbildlich zueinander angeordnet sind.
